Europäisches Patentamt

European Patent Office

Office européen des brevets

(19)

(11) Veröffentlichungsnummer : **0 206 053**
**B1**

(12) **EUROPÄISCHE PATENTSCHRIFT**

(45) Veröffentlichungstag der Patentschrift :
07.03.90

(21) Anmeldenummer : 86107730.3

(22) Anmeldetag : 06.06.86

(51) Int. Cl.$^5$ : **C 09 J   7/02**

(54) **Beschriftbares und kopierbares Polyolefin-Klebeband und Verfahren zu seiner Herstellung.**

(30) Priorität : 15.06.85 DE 3521532

(43) Veröffentlichungstag der Anmeldung :
30.12.86 Patentblatt 86/52

(45) Bekanntmachung des Hinweises auf die Patenterteilung : 07.03.90 Patentblatt 90/10

(84) Benannte Vertragsstaaten :
BE DE FR GB IT NL

(56) Entgegenhaltungen :
EP-A- 0 053 925
EP-A- 0 079 519
GB-A- 2 103 513
GB-A- 2 108 008

(73) Patentinhaber : HOECHST AKTIENGESELLSCHAFT
Postfach 80 03 20
D-6230 Frankfurt am Main 80 (DE)

(72) Erfinder : Crass, Günther
Bachstrasse 7
D-6204 Taunusstein 4 (DE)
Erfinder : Hammerschmidt, Peter
Münzenbergstrasse 20
D-6200 Wiesbaden (DE)
Erfinder : Bothe, Lothar, Dr.
Am Heiligenhaus 9
D-6500 Mainz-Gonsenheim (DE)

**Beschreibung**

Die Erfindung betrifft ein beschriftbares und kopierbares Polyolefin-Klebeband aus einer biaxial orientierten und transparenten ein- oder mehrschichtigen Trägerfolie aus im wesentlichen Polyolefin und einer darauf einseitig aufgebrachten Klebstoffschicht. Die Erfindung betrifft ferner ein Verfahren zur Herstellung dieses Klebebandes.

Unter der Bezeichnung MAGIC TAPE oder MENDING TAPE sind Klebebänder bekannt, die zur Reparatur von Schriftstücken (z. B. nach Einrissen) dienen. Sie sind in der Regel mit Bleistift oder Kugelschreiber beschriftbar und lassen sich ohne störende Farbunterschiede (Pausfehler, Markierungen) kopieren. Diese bekannten Klebebänder bestehen aus einer oberflächenrauhen (beschriftbaren) Celluloseacetat-Gießfolie, deren Rauhigkeit durch ein mattiertes Gießband (Unterguß) erzeugt worden ist. Ihre Herstellung ist kostenintensiv, da der Gießprozeß nur relativ langsam abläuft und die Rückgewinnung des Lösungsmittels aufwendig ist.

Es sind auch schon seit langem durch Extrusion hergestellte Polyolefin-Folien bekannt, die relativ gut beschriftbar sind (auch Synthesepapiere genannt). Die Beschriftbarkeit wird dadurch erreicht, daß der extrudierten Folie durch Prägung eine Oberflächenrauhigkeit verliehen wird, oder daß dem Polyolefin, aus dem die Folie hergestellt wird, ein anorganisches Pigment inkorporiert wird. Es sind ferner opake Polyolefin-Folien bekannt, die insbesondere als Papierersatz, zum Beispiel beim Einschlag von Schokoladen-Riegeln und dergleichen, verwendet werden. Da all diese Polyolefin-Folien mehr oder weniger weiß bzw. opak sind, weisen sie nicht jene Durchsichtigkeit auf, die im Hinblick auf die Bereitung von transparenten Klebebändern verlangt wird. Aufgrund ihrer weißen Farbe bzw. ihrer Opazität sind sie nicht ohne Farbunterschiede pausfähig oder kopierbar. Sie besitzen also nicht die Eigenschaft, sowohl beschriftbar als auch ohne Markierungen kopierbar zu sein und sind deshalb für den in Rede stehenden Zweck, das heißt für die Herstellung eines MENDING TAPE, unbrauchbar.

Auch die bekannten Polyolefin-Klebebänder weisen nicht die Eigenschaft auf, gut beschriftbar und ohne Pausfehler, Markierungen und dergleichen kopierbar zu sein.

Aus der deutschen Offenlegungsschrift 31 44 911 ist ein Polyolefin-Klebeband bekannt, das aus einer biaxial orientierten und transparenten ein- oder mehrschichtigen Trägerfolie aus im wesentlichen Polyolefin und einer darauf einseitig aufgebrachten Klebstoffschicht besteht. Dieses transparente Polyolefin-Klebeband besitzt zwar gute mechanische Eigenschaften und es ist auch weitgehend markierungslos kopierbar, es ist jedoch nicht beschriftbar.

Aus der deutschen Offenlegungsschrift 32 16 603 ist ein Polyolefin-Klebeband mit einer biaxial orientierten dreischichtigen Trägerfolie bekannt, deren Mittelschicht aus Polyolefin als Hauptkomponente und einem anorganischen Pigment besteht. Mit Hilfe der Füllstoff enthaltenden Schicht und einer Klebstoffbeschichtung hohen Haftvermögens wird erreicht, daß das Klebeband beim Entfernen von der Unterlage durch Delaminierung zerstört wird und dadurch einen Hinweis auf die beabsichtigte Entfernung hinterläßt. Dieses Polyolefin-Klebeband ist weder beschriftbar noch kopierbar.

Der Erfindung liegt demnach die Aufgabe zugrunde, ein Klebeband auf der Basis von Polyolefinen zu schaffen, das neben guten mechanischen Eigenschaften sowohl gut beschriftbar als auch ohne irgendwelche Farbunterschiede wie Markierungen, hell-dunkel-Unterschiede und dergleichen kopierbar ist. Das neue Polyolefin-Klebeband soll also ein hervorragendes MENDING TAPE darstellen.

Das erfindungsgemäße beschriftbare und kopierbare Polyolefin-Klebeband aus einer biaxial orientierten und transparenten ein- oder mehrschichtigen Trägerfolie aus im wesentlichen Polyolefin und einer darauf einseitig aufgebrachten Klebstoff-Schicht ist dadurch gekennzeichnet, daß die Trägerfolie auf der der Klebstoff-Schicht abgewandten Seite eine ebenfalls transparente und im Vergleich zur Trägerfolie dünne Außenschicht aufweist, die im wesentlichen aus einem Polyolefin als Hauptkomponente und 10 bis 40 Gew.-%, bezogen auf die Schicht, von einem anorganischen Weißpigment besteht, wobei die mittlere Teilchengröße des Weißpigmentes größer ist als die Dicke dieser für die Beschriftung vorgesehenen Außenschicht, die mittlere Teilchengröße im Bereich von 1 bis 5 μm und die Dicke der Außenschicht im Bereich von 0,5 bis 1,5 μm liegt und der Quotient aus dem Wert der mittleren Teilchengröße des eingesetzten Weißpigmentes und dem Wert der Dicke der Schicht gleich oder kleiner 3,5 ist.

Die erfindungsgemäß vorgeschlagene Außenschicht auf einer Seite (Oberfläche) der Trägerfolie (auf der anderen Seite der Trägerfolie befindet sich die Klebstoff-Beschichtung) besteht im wesentlichen aus 60 bis 90 Gew.-%, vorzugsweise 70 bis 85 Gew.-%, von einem Polyolefin und 10 bis 40 Gew.-%, vorzugsweise 15 bis 30 Gew.-% (Gewichtsprozente bezogen auf die Schicht), von einem anorganischen Weißpigment, dessen mittlere Teilchengröße (mittlerer Teilchendurchmesser) größer ist als die (mittlere) Dicke der Schicht, wobei die mittlere Teilchengröße 1 bis 5 μm beträgt, vorzugsweise 1,5 bis 3 μm, die (mittlere) Dicke der Außenschicht 0,5 bis 1,5 μm beträgt und der Quotient aus dem Wert der mittleren Teilchengröße des Weißpigmentes und dem Wert der Dicke der Schicht gleich oder kleiner 3,5 ist. Das anorganische Weißpigment ist vorzugsweise ein Bariumsulfat, Calciumcarbonat, Natrium-Aluminium-Silicat, Siliciumdioxid oder ein Titandioxid oder eine Mischung aus zwei oder mehreren dieser Weißpigmente, wobei Calciumcarbonat besonders bevorzugt ist.

Die erfindungsgemäß vorgeschlagene Außenschicht, bestehend im wesentlichen aus einem Polyolefin und darin gut verteilten festen, anorganischen Partikelchen mit den genannten Merkmalen, ist transparent und gut beschriftbar. Eine besonders gute Beschriftbarkeit auch mit Tinte wird erreicht, wenn die Außenschicht etwa 1 bis 5 Gew.-%, bezogen auf die Schicht, von einem pulverförmigen Polysaccharidderivat enthält. Bevorzugte Polysaccharidderivate sind Stärke und/oder Cellulosederivate wie Alkyl-, Hydroxyalkyl- und Carboxyalkylether (oder Mischether) der Cellulose, wobei Alkyl eine Gruppe mit vorzugsweise 1 bis 3 C-Atomen, Hydroxyalkyl eine Gruppe mit vorzugsweise 2 bis 4 C-Atomen und Carboxyalkyl eine Gruppe mit vorzugsweise 2 bis 3 C-Atomen ist. Es versteht sich von selbst, daß bezüglich der Teilchen des pulverförmigen Polysaccharids die gleichen Bedingungen gestellt werden wie beim pulverförmigen anorganischen Weißpigment.

Die Trägerfolie des erfindungsgemäßen Klebebandes ist vorzugsweise ein- oder zweischichtig aufgebaut. Im Fall einer einschichtigen Trägerfolie besteht das erfindungsgemäße Klebeband aus einer Polyolefin-Monofolie als Trägerfolie, die auf einer Seite die Klebstoffschicht und auf der anderen Seite die erfindungsgemäß vorgeschlagene beschriftbare Außenschicht aufweist. Im Fall einer zweischichtigen Trägerfolie besteht diese aus einer relativ dicken Schicht (Basisschicht) und einer vergleichsweise dünnen Schicht aus jeweils im wesentlichen Polyolefin, wobei auf der dünnen Schicht die Klebstoff-Beschichtung und auf der Basisschicht die beschriebene, beschriftbare Außenschicht liegt. Bei dieser Ausführungsform des erfindungsgemäßen Klebebandes besteht die dünne Schicht der Trägerfolie im Hinblick auf die Herstellung durch Coextrusion vorzugsweise aus den gleichen Komponenten wie die genannte Außenschicht (in diesem Fall ist es klarerweise gleichgültig, wo die Klebstoffschicht aufgebracht wird).

Besonders gute mechanische und physikalische Eigenschaften des erfindungsgemäßen Klebebandes werden dann erreicht, wenn die Trägerfolie, das ist die genannte Monofolie bzw. die genannte Basisschicht, 5 bis 25 Gew.-%, vorzugsweise 10 bis 15 Gew.-%, bezogen auf das Polyolefin, von einem natürlichen oder synthetischen Harz (einem sogenannten harten Harz) mit einem Erweichungspunkt von 70 bis 170 °C, vorzugsweise 80 bis 140 °C, enthält. Bevorzugte harte Harze sind Styrolpolymerisate, α-Methylstyrol-Styrol-Copolymerisate, α-Methylstyrol-Vinyltoluol-Copolymerisate, vorzugsweise hydriert, Pentadienpolymerisate, α-Pinen- oder β-Pinenpolymerisate, Terpenpolymerisate, Kolophonium und modifiziertes Kolophonium.

Unter Polyolefin werden $C_2$- bis $C_6$-α-Olefinpolymere (Homo- oder Copolymere), vorzugsweise Ethylenpolymere und/oder Propylenpolymere verstanden. Propylenpolymere sind besonders bevorzugt. Das Propylenpolymere kann ein Homo- und/oder ein Copolymeres (Blockcopolymeres oder statistisches Copolymeres) des Propylens sein. Der Comonomer-Anteil beträgt im allgemeinen bis zu 20 Gew.-%, vorzugsweise bis zu 10 Gew.-%, bezogen auf das Copolymere. Geeignete Comonomere sind Ethylen und $C_4$- bis $C_6$-α-Olefine, wobei Ethylen besonders bevorzugt ist.

Die Dicke der erfindungsgemäß vorgeschlagenen beschriftbaren Außenschicht beträgt 0,5 bis 1,5 μm. Die Dicke (Gesamtdicke) der Trägerfolie kann innerhalb weiter Grenzen variieren. Sie beträgt im allgemeinen 15 bis 60 μm, vorzugsweise 25 bis 45 μm. Im Fall einer mehrschichtigen Trägerfolie beträgt die Dicke der neben der Basisschicht vorhandenen, vergleichsweise dünnen Schichten jeweils etwa 0,5 bis 1,5 μm. Die Dicke der Klebstoffschicht liegt in dem für Klebebänder üblichen Bereich.

Die Herstellung des erfindungsgemäßen Klebebandes, bestehend aus der beschriebenen Trägerfolie mit der speziellen Außenschicht und einer Klebstoffschicht, erfolgt nach dem bekannten Coextrusionsverfahren. Im Rahmen dieses Verfahrens wird vorzugsweise so vorgegangen, daß die den einzelnen Schichten der Folie entsprechenden Schmelzen durch eine Flachdüse coextrudiert werden, die coextrudierte Folie zur Verfestigung abgekühlt, die verfestigte Folie zuerst bei einer Temperatur von 140 bis 150 °C und einem Streckverhältnis von 5 bis 7 : 1 längsgestreckt und dann bei einer Temperatur von 160 bis 175 °C und einem Streckverhältnis von 8 bis 10 : 1 quergestreckt, die biaxial gestreckte Folie thermofixiert und auf der der genannten Außenschicht abgewandten Seite der Trägerfolie die Klebstoff-schicht (nach einem der üblichen Verfahren) aufgebracht wird.

Zunächst wird also, wie bei üblichen Coextrusionsverfahren, die durch intensives Mischen der Komponenten bereitete Polymermischung (Formmasse) der einzelnen Schichten in einem Extruder komprimiert und verflüssigt. Die Schmelzen werden dann gleichzeitig durch eine Flachdüse (Breitschlitzdüse) gepreßt und die ausgepreßte mehrschichtige Folie wird auf einer oder mehreren Walzen, die durch Kühlung auf etwa 30 bis 50 °C gehalten werden, abgekühlt und verfestigt. Die so erhaltene Folie wird dann längs- und quergestreckt, um eine Orientierung der Molekülketten zu erreichen. Es hat sich herausgestellt, daß es vorteilhaft ist, wenn die Längsstreckung (die erste Längsstreckung) bei einer relativ hohen Folientemperatur durchgeführt wird. Die Längsstreckung wird daher vorzugsweise bei einer Folientemperatur von 140 bis 150 °C und einem Streckverhältnis von 5 bis 7 : 1 durchgeführt. Die Querstreckung wird vorzugsweise bei einer Folientemperatur von 160 bis 175 °C und einem Streckverhältnis von 8 bis 10 : 1 durchgeführt. Die biaxiale Streckung kann simulaten oder nacheinander vorgenommen werden, sie wird vorzugsweise nacheinander, und zwar zuerst längs und dann quer vorgenommen. Es hat sich ferner als vorteilhaft erwiesen, der angegebenen Längs- und Querstreckung eine weitere Längsstreckung anzuschließen. Diese Nachlängsstreckung wird vorzugsweise bei einer Folientemperatur von 120 bis 150 °C und einem Streckverhältnis von 1,2 bis 2 : 1 durchgeführt. Das Längsstrecken wird man zweckmäßigerweise mit Hilfe zweier, entsprechend dem angestrebten Streckverhältnis verschieden schnell laufender Walzen durchführen und das Querstrecken mit Hilfe eines entsprechenden Kluppenrahmens (da beim Verstrecken von einem ein anorganisches Pigment enthaltenden Polyolefin bekanntlich Vakuolen oder Mikrohohlräume entstehen können, welche die Transparenz der Folie beeinträchtigen, versteht es sich von selbst, daß die biaxiale Orientierung unter solchen Bedingungen durchgeführt wird, die zu keinen Vakuolen oder Mikrohohlräumen führen). Zur Thermofixierung wird die Folie etwa 0,5 bis 10 Sekunden lang bei einer Temperatur von 150 bis 160 °C gehalten.

Zur Klebstoffbeschichtung, die nach einer der üblichen Methoden durchgeführt wird, werden vorzugsweise die für Polyolefinfolien geeigneten Kautschuk- oder Acrylatkleber eingesetzt.

Mit der vorliegenden Erfindung wird ein Polyolefin-Klebeband zur Verfügung gestellt, das eine hohe Transparenz aufweist, sowohl gut beschriftbar als auch ohne irgendwelche Farbunterschiede kopierbar ist und darüber hinaus auch gute mechanische Eigenschaften besitzt. Es ist mit allen gebräuchlichen Mitteln wie Bleistift, Kugelschreiber, Tinte, Schreibmaschine und dergleichen beschriftbar. Es verursacht beim Pausen oder Kopieren keinerlei Markierungen, hell-dunkel-Unterschiede und dergleichen, so daß an der Kopie beispielsweise eine Reparatur des kopierten Schriftstücks mit dem Klebeband nicht zu erkennen ist. Nachdem das erfindungsgemäße Klebeband auch gute mechanische Eigenschaften besitzt, stellt es ein hervorragendes MENDING TAPE auf der Basis von Polyolefinen dar. Ein weiterer Vorteil des neuen beschriftbaren und kopierbaren Klebebandes ergibt sich daraus, daß es eine primerfreie Klebstoffbeschichtung trägt und keinen Release Coat benötigt.

Die Erfindung wird nun an Beispielen noch näher erläutert.

### Beispiel 1

Mit Hilfe des Coextrusionsverfahrens wurde bei einer Extrusionstemperatur von etwa 260 °C aus einer Breitschiltzdüse eine zweischichtige Folie extrudiert, wobei die Schmelze für die eine Schicht, das ist die als Monofolie ausgebildete Trägerfolie, aus einem Propylenhomopolymeren bestand und die Schmelze für die andere Schicht, das ist die für die Beschriftung vorgesehene Außenschicht, aus 75 Gew.-% von einem Propylenhomopolymeren und 25 Gew.-% von einem Calciumcarbonat mit einer mittleren Teilchengröße (Teilchendurchmesser) von 2,3 µm (das Propylenhomopolymere war jeweils ein isotaktisches Polypropylen). Die auf der bei ca. 30 °C gehaltenen Abzugswalze verfestigte Vorfolie wurde in einem Heizkanal auf Strecktemperatur gebracht und zunächst bei 145 °C um den Faktor 6 längsgestreckt und dann bei 172 °C um den Faktor 8,5 quergestreckt. Die nachfolgende Thermofixierung erfolgte bei 160 °C, 5 Sekunden lang.

Die als Monofolie ausgebildete Trägerfolie hatte eine Dicke von 39 µm und die Außenschicht eine Dicke von 1 µm (die mittlere Teilchengröße des eingesetzten Weißpigmentes ist größer als die Dicke der Außenschicht und der Quotient aus der mittleren Teilchengröße des Weißpigmentes und der Dicke der Außenschicht ist 2,3, also kleiner als 3,5).

### Beispiel 2

Es wurde wie in Beispiel 1 vorgegangen, mit der Ausnahme, daß die Schmelze für die Außenschicht aus 90 Gew.-% von dem genannten Propylenhomopolymeren und 10 Gew.-% von einem Titandioxid mit einer mittleren Teilchengröße von 1,2 µm bestand.

Die Trägerfolie hatte eine Dicke von 39 µm und die Außenschicht eine Dicke von 1 µm (die mittlere Teilchengröße des eingesetzten Weißpigmentes ist größer als die Dicke der Außenschicht und der Quotient der beiden Werte ist 1, 2).

### Beispiel 3

Es wurde wie in Beispiel 1 vorgegangen, mit der Ausnahme, daß die Schmelze für die Außenschicht aus 60 Gew.-% von dem genannten Propylenhomopolymeren und 40 Gew.-% von einem Bariumsulfat mit einer mittleren Teilchengröße von 3,5 µm bestand.

Die Trägerfolie hatte eine Dicke von 39 µm und die Außenschicht eine Dicke von 1 µm (die mittlere Teilchengröße des eingesetzten Weißpigmentes ist größer als die Dicke der Außenschicht und der Quotient der beiden Werte ist 3, 5).

### Beispiel 4

Es wurde wie in Beispiel 1 vorgegangen, mit der Ausnahme, daß die Schmelze für die Trägerfolie aus 90 Gew.-% von dem genannten Propylenhomopolymeren und 10 Gew.-% von einem α-Methylstyrol-Styrolcopolymerisat mit einem Erweichungspunkt von 120 °C und die Schmelze für die Außenschicht aus 85 Gew.-% von dem genannten Propylenhomopolymeren und 15 Gew.-% von dem genannten Calciumcarbonat bestand. Die Trägerfolie hatte eine Dicke von 34 µm und die Außenschicht eine Dicke von 1 µm (die mittlere Teilchengröße des eingesetzten Weißpigmentes ist größer als die Dicke der Außenschicht und der Quotient der beiden Werte ist 2, 3).

Beispiel 5

Es wurde wie in Beispiel 1 vorgegangen, mit der Ausnahme, daß die Schmelze für die Trägerfolie aus 85 Gew.-% von dem genannten Propylenhomopolymeren und 15 Gew.-% von einem Polyterpenharz mit einem Erweichungspunkt von 125 °C und die Schmelze für die Außenschicht aus 70 Gew.-% von dem genannten Propylenhomopolymeren und 30 Gew.-% von dem genannten Calciumcarbonat bestand.

Die Trägerfolie hatte eine Dicke von 34 μm und die Außenschicht eine Dicke von 1 μm (die mittlere Teilchengröße des eingesetzten Weißpigmentes ist größer als die Dicke der Außenschicht und der Quotient der beiden Werte ist 2, 3).

Beispiele 6 und 7

Die Beispiele 4 und 5 wurden wiederholt, wobei nach dem Längs- und Querstrecken eine Nachlängsstreckung bei einer Folientemperatur von 145 °C und einem Streckverhältnis von 1,5 : 1 durchgeführt wurde.

Die Trägerfolie der Beispiele 6 und 7 hatte*) eine Dicke von 25 μm und die Außenschicht eine Dicke von 0,8 μm (die mittlere Teilchengröße des eingesetzten Weißpigmentes ist jeweils größer als die Dicke der Außenschicht und der Quotient der beiden Werte ist jeweils 2, 9).

*) (nach der Nachlängsstreckung).

Zur Bereitung eines Klebebandes wurden die Folien der Beispiele 1 bis 7 mit Hilfe eines üblichen Antragswerkes mit einem Kautschukkleber beschichtet.

Die so erhaltenen Klebebänder wurden bezüglich Beschriftbarkeit (mit Bleistift und mit Kugelschreiber) und markierungsloser Kopierbarkeit sowie bezüglich Elastizitätsmodul, Reißfestigkeit und Reißdehnung (jeweils in der Längsrichtung) geprüft. Die Prüfung auf Beschriftbarkeit und markierungslose Kopierbarkeit erfolgte durch visuelle Beurteilung. Der Elastizitätsmodul in Längsrichtung (Längs-E-Modul) wurde nach DIN 53 457, die Reißfestigkeit in Längsrichtung und die Reißdehnung in Längsrichtung nach DIN 53 455 bestimmt.

Die Ergebnisse sind in der folgenden Tabelle zusammengefaßt.

Tabelle

| Bei-spiel Nr. | Beschrift-barkeit | Kopier-barkeit | Längs-E-Modul (N/mm²) | Reißfestig-keit, längs (N/mm²) | Reißdehnung, längs (%) |
|---|---|---|---|---|---|
| 1 | + + | + + | 2.200 | 150 | 150 |
| 2 | + − | + + | 2.200 | 150 | 150 |
| 3 | + + | + − | 2.200 | 150 | 150 |
| 4 | + + | + + | 2.800 | 170 | 130 |
| 5 | + + | + + | 3.000 | 180 | 120 |
| 6 | + + | + + | 3.750 | 220 | 70 |
| 7 | + + | + + | 4.500 | 230 | 50 |

++ sehr gut
+− mäßig
−− schlecht

**Patentansprüche**

1. Beschriftbares und kopierbares Polyolefin-Klebeband aus einer biaxial orientierten und transparenten ein- oder mehrschichtigen Trägerfolie aus im wesentlichen Polyolefin und einer darauf einseitig aufgebrachten Klebstoff-Schicht, dadurch gekennzeichnet, daß die Trägerfolie auf der der Klebstoff-Schicht abgewandten Seite eine ebenfalls transparente und im Vergleich zur Trägerfolie dünne Außenschicht aufweist, die im wesentlichen aus einem Polyolefin als Hauptkomponente und 10 bis 40 Gew.-%, bezogen auf die Schicht, von einem anorganischen Weißpigment besteht, wobei die mittlere Teilchengröße des Weißpigmentes größer ist als die Dicke dieser für die Beschriftung vorgesehenen Außenschicht, die mittlere Teilchengröße im Bereich von 1 bis 5 μm und die Dicke der Außenschicht im Bereich von 0,5 bis 1,5 μm liegt und der Quotient aus dem Wert der mittleren Teilchengröße des eingesetzten Weißpigmentes und dem Wert der Dicke der Schicht gleich oder kleiner 3, 5 ist.

2. Klebeband nach Anspruch 1, dadurch gekennzeichnet, daß das anorganische Weißpigment ein Bariumsulfat, Calciumcarbonat, Natrium-Aluminium-Silicat, Siliciumdioxid oder ein Titandioxid oder eine Mischung aus zwei oder mehreren dieser Weißpigmente ist.

3. Klebeband nach einem der Ansprüche 1 oder 2, dadurch gekennzeichnet, daß die Außenschicht 1 bis 5 Gew.-%, bezogen auf die Schicht, von einem Polysaccharidderivat, ausgewählt aus der Gruppe bestehend aus Stärke und Celluloseether, enthält.

4. Klebeband nach einem oder mehreren der Ansprüche 1 bis 3, dadurch gekennzeichnet, daß die Trägerfolie eine Monofolie ist oder eine zweischichtige Folie, die aus einer Basisschicht und einer im Vergleich zur Basisschicht dünneren, für das Aufbringen des Klebstoffes vorgesehenen Schicht besteht.

5. Klebeband nach einem oder mehreren der Ansprüche 1 bis 4, dadurch gekennzeichnet, daß die Trägerfolie 5 bis 25 Gew.-%, bezogen auf das Polyolefin, von einem natürlichen oder synthetischen Harz mit einem Erweichungspunkt von 70 bis 170 °C enthält.

6. Klebeband nach einem oder mehreren der Ansprüche 1 bis 5, dadurch gekennzeichnet, daß die Außenschicht eine Dicke von 0,5 bis 1,5 μm und die Trägerfolie eine Dicke von 15 bis 60 μm aufweist.

7. Klebeband nach einem oder mehreren der Ansprüche 1 bis 6, dadurch gekennzeichnet, daß das Polyolefin ein Propylenpolymeres ist.

8. Verfahren zur Herstellung eines Polyolefin-Klebebandes nach Anspruch 1, dadurch gekennzeichnet, daß die den einzelnen Schichten entsprechenden Schmelzen durch eine Flachdüse coextrudiert werden, die coextrudierte Folie zur Verfestigung abgekühlt, die verfestigte Folie zuerst bei einer Temperatur von 140 bis 150 °C und einem Streckverhältnis von 5 bis 7 : längsgestreckt und dann bei einer Temperatur von 160 bis 175 °C und einem Streckverhältnis von 8 bis 10 : 1 quergestreckt, die biaxial gestreckte Folie thermofixiert und auf der genannten Außenschicht abgewandten Seite der Trägerfolie die Klebstoffschicht aufgebracht wird.

9. Verfahren nach Anspruch 8, dadurch gekennzeichnet, daß nach der Längs- und Querstreckung eine weitere Längsstreckung bei einer Folientemperatur von 120 bis 150 °C und einem Streckverhältnis von 1,2 bis 2 : 1 durchgeführt wird.

**Claims**

1. Polyolefin adhesive tape which can be written on and duplicated, comprising a biaxially oriented and transparent one- or multilayer backing film essentially of polyolefin and an adhesive layer applied thereto on one side, characterized in that the backing film, on the side facing away from the adhesive layer, has a likewise transparent outer layer which is thin in comparison with the backing film and which is composed essentially of a polyolefin as the main component and 10 to 40 % by weight, relative to the layer, of an inorganic white pigment, the average particle size of the white pigment being greater than the thickness of said outer layer which is provided for writing on, the average particle size being in the range of from 1 to 5 μm and the thickness of the outer layer being in the range of from 0.5 to 1.5 μm, and the quotient of the value of the average particle size of the white pigment used and the value of the thickness of the layer being less than or equal to 3.5.

2. Adhesive tape according to Claim 1, characterized in that the inorganic white pigment is a barium sulphate, calcium carbonate, sodium aluminium silicate, silicon dioxide or a titanium dioxide or a mixture of two or more of these white pigments.

3. Adhesive tape according to either of Claims 1 and 2, characterized in that the outer layer contains 1 to 5 % by weight, relative to the layer, of a polysaccharide derivative selected from the group consisting of starch and cellulose ether.

4. Adhesive tape according to one or more of Claims 1 to 3, characterized in that the backing film is a mono film or a two-layer film which comprises a base layer and a layer, thinner than the base layer provided for applying the adhesive.

5. Adhesive tape according to one or more of Claims 1 to 4, characterized in that the backing film contains 5 to 25 % by weight, relative to the polyolefin, of a natural or synthetic resin having a softening point of 70 to 170 °C.

6. Adhesive tape according to one or more of Claims 1 to 5, characterized in that the outer layer has a thickness of 0.5 to 1.5 μm and the backing film has a thickness of 15 to 60 μm.

7. Adhesive tape according to one or more of Claims 1 to 6, characterized in that the polyolefin is a propylene polymer.

8. Process for the production of a polyolefin adhesive tape according to Claim 1, characterized in that the melts corresponding to the individual layers are coextruded through a flat film die, the coextruded film is cooled in order to solidify it, the solidified film is initially stretched longitudinally at a temperature of 140 to 150 °C and in a stretch ratio of 5 to 7 : 1 and then stretched transversely at a temperature of 160 to 175 °C and in a stretch ratio of 8 to 10 : 1, the biaxially stretched film is heat set and the adhesive layer is applied to the side of the backing film which faces away from said outer layer.

9. Process according to Claim 8, characterized in that, after the longitudinal and transverse stretching, a further longitudinal stretching is carried out at a film temperature of 120 to 150 °C and in a stretch ratio of 1.2 to 2 : 1.

**Revendications**

1. Ruban adhésif en polyoléfine, sur lequel on peut écrire et qui peut être copié, consistant en une feuille support mono- ou multicouche, orientée biaxialement et transparente formée essentiellement de polyoléfine et d'une couche adhésive déposée sur l'une de ses faces, caractérisé en ce que la feuille support présente sur la face opposée à la couche adhésive une couche externe également transparente et mince par rapport à la feuille support, essentiellement constituée d'une polyoléfine comme composant principal et de 10 à 40 % en poids, par rapport à la couche, d'un pigment blanc inorganique, la taille moyenne des particules du pigment blanc étant supérieure à l'épaisseur de ladite couche externe prévue pour l'écriture, la taille moyenne des particules étant de l'ordre de 1 à 5 µm et l'épaisseur de la couche externe étant de l'ordre de 0,5 à 1,5 µm, le rapport de la valeur de la taille moyenne des particules du pigment blanc mis en œuvre à la valeur de l'épaisseur de la couche étant égal ou inférieur à 3,5.

2. Ruban selon la revendication 1, caractérisé en ce que le pigment blanc inorganique est du sulfate de baryum, du carbonate de calcium, du silicate de sodium et d'aluminium, du dioxyde de silicium ou du dioxyde de titane, ou un mélange de deux ou plusieurs de ces pigments blancs.

3. Ruban selon l'une des revendications 1 ou 2, caractérisé en ce que la couche externe renferme de 1 à 5 % en poids, par rapport à la couche, d'un dérivé de polysaccharide choisi dans le groupe constitué par l'amidon et l'éther de cellulose.

4. Ruban selon une ou plusieurs des revendications 1 à 3, caractérisé en ce que la feuille support est une feuille monocouche ou une feuille bicouche composée d'une couche de base et d'une couche pour le dépôt de l'adhésif plus mince que la couche de base.

5. Ruban selon une ou plusieurs des revendications 1 à 4, caractérisé en ce que la feuille support contient de 5 à 25 % en poids, par rapport à la polyoléfine, d'une résine naturelle ou synthétique ayant un point de ramollissement de 70 à 170 °C.

6. Ruban selon une ou plusieurs des revendications 1 à 5, caractérisé en ce que la couche externe a une épaisseur comprise entre 0,5 et 1,5 µm et la feuille support a une épaisseur comprise entre 15 et 60 µm.

7. Ruban selon une ou plusieurs des revendications 1 à 6, caractérisé en ce que la polyoléfine est un polymère de propène.

8. Procédé de fabrication d'un ruban adhésif à base de polyoléfine selon la revendication 1, caractérisé en ce que l'on coextrude à l'aide d'une filière plate les masses fondues correspondant aux différentes couches, on refroidit la feuille solidifiée d'abord longitudinalement avec un rapport d'étirage de 5 à 7 :1 à une température de 140 à 150 °C, puis transversalement selon un rapport d'étirage de 8 à 10 :1 à une température de 160 à 175 °C, on procède au thermofixage de la feuille étirée biaxialement et on dépose la couche adhésive sur la face opposée à ladite couche externe de la feuille support.

9. Procédé selon la revendication 8, caractérisé en ce que l'on réalise, après les étirages longitudinal et transversal, un étirage longitudinal supplémentaire à une température de feuille comprise entre 120 et 150 °C et avec un rapport d'étirage de 1,2 à 2 :1.